# EUROPEAN PATENT APPLICATION

(11) **EP 2 101 519 A1**
(43) Date of publication of application: **16.09.2009**
(21) Application number: 08152604.8
(22) Date of filing: 11.03.2008
(51) Int. Cl.: H04W 4/00, H04L 12/56

(54) **Wireless communication systems**

(71) Applicant: FUJITSU LIMITED, Kawasaki-shi, Kanagawa 211-8588 (JP)
(72) Inventor: Lu, Yanling, Hayes, Middlesex, London UB4 8QN (GB); Okuda, Masato, Tokorozawa-shi, Saitama 359-0022 (JP)
(74) Representative: Stebbing, Timothy Charles

(57) **Abstract**

A modified signalling procedure for supporting handover of a mobile stations MS attached to a moving relay station in a wireless communication system, more particularly but not exclusively an MRS as defined in IEEE802.16j. First, the target access link channel characteristic of the MRS is determined, by the MRS or an MR-BS, so that the MRS knows or informed of the target channel characteristics of access link, then the MRS broadcasts a MOB_NBR-ADV message to inform the MSs attached of MRS access link target channel characteristics. The MRS itself is included in the neighbour station list with IEs set to corresponding information of channel characteristics. This MOB-NBR-ADV is not a normal, periodic broadcast message, but a special message preceding the handover request message. The serving MRS then exchanges handover decision and initiation stage signalling with each MS. Then all the attached MS are handed off to the same MRS with the target channel characteristics on the access link. The modified procedure can eliminate calls being dropped due to the MSs attached to an MRS not being aware of the target channel characteristic at the time of receiving a handover request message from the MR-BS.

## Description

Currently there exists significant interest in the use of multihop techniques in packet based wireless communication systems, where it is expected that such techniques will enable both extension in coverage range and/or increase in system capacity (throughput). Multihop involves the use of relay stations (RS) added to the conventional wireless communication system configuration of base stations (BS) and mobile stations (MS).

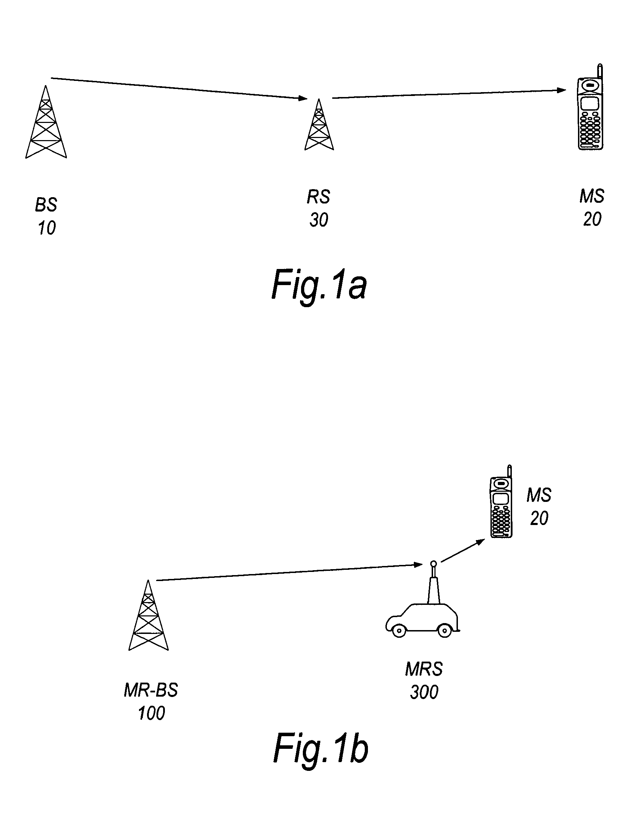

In a multi-hop communication system, communication signals are sent in along a communication path or link from a source apparatus to a destination apparatus via one or more intermediate apparatuses. Figure 1a illustrates a single-cell two-hop wireless communication system comprising a base station BS 10, a relay station RS 30, and a mobile station MS 20, also referred to as user equipment (UE). Such a system, employing mobile stations as well as relay stations (fixed or mobile) in a multi-hop arrangement, is called a mobile multi-hop (MMR) system. By including the RS 30 in the communications chain, the BS 10 can serve an MS outside its normal range, for example when the MS is located indoors where signals from the BS do not reach sufficiently. For simplicity, Fig. 1a indicates only the downlink, in other words a communications channel from the BS 10 via the RS 30 to the MS 20. In practice, however, an uplink (channel from the MS back to the BS) is normally present as well, though this need not necessarily be routed via the same RS 30. In some wireless communication systems, notably those using WiMAX technology (IEEE802.16 and its variants), a link such as RS-MS terminating at an MS is called an access link. Meanwhile, the link BS-RS between the BS and RS is called a relay link. It is possible for more than one RS 30 to be involved in the communications chain from BS 10 to MS 20 and in this case a relay link RS-RS is defined between each two RSs in the chain.

Moreover, it is possible for more than one access link to be established simultaneously to the same MS 20, e.g. from different relay stations (this is called co-operative relay). Different communication paths may exist for user data (data useful to the user, such as a voice call or video stream), and control information (for signalling purposes and housekeeping in the system).

In practice, of course, several BSs, RSs and MSs are combined to form a larger system, and communication links between elements (wireless transceiver units) in the system are continually formed and re-formed as user demands and locations (and thus the positions of MSs relative to the other system elements) change. Typically, multiple MSs are associated (or "attached") to each RS 30. In addition to data transmissions via the downlink and uplink, various control signals are exchanged between the elements of the system. and control signals exchanged in a so-called "handover" (or handoff) of an RS from one BS (or RS) to another (or to another RS) are the particular concern of the present invention. The BSs are normally in mutual communication via a wired backbone network in addition to being able to communicate wirelessly.

In Figure 1a, the RS 30 is assumed to be fixed, as would be the case if installed in an office building for example, but Figure 1b shows a variation of the Fig. 1a scheme in which the RS itself is mobile, for example installed in a vehicle. In this case, the RS is referred to as a Mobile Relay Station MRS 300. An MRS 300 installed in a bus, for example, may serve several MSs 20 which move along with the MRS. The BS may be relabelled as an MR-BS 100 to denote that it has the capability to support relay stations. In the remainder of this specification, the term BS is used synonymously with MR-BS. Also, the term RS includes MRS wherever appropriate; for example, an RS-RS link may be formed with an MRS at either or both ends. Mobile multi-hop relay can be summed up as the concept of relaying user data between an MS and MR-BS, and possibly control information between an MR-BS and an MS or RS, through one or more RSs. It may be possible to establish multiple communication paths between an MR-BS 100 and an MS 20, including possibly a direct path not involving the MRS 300, and to communicate the same user data and/or control information though the multiple paths to improve performance.

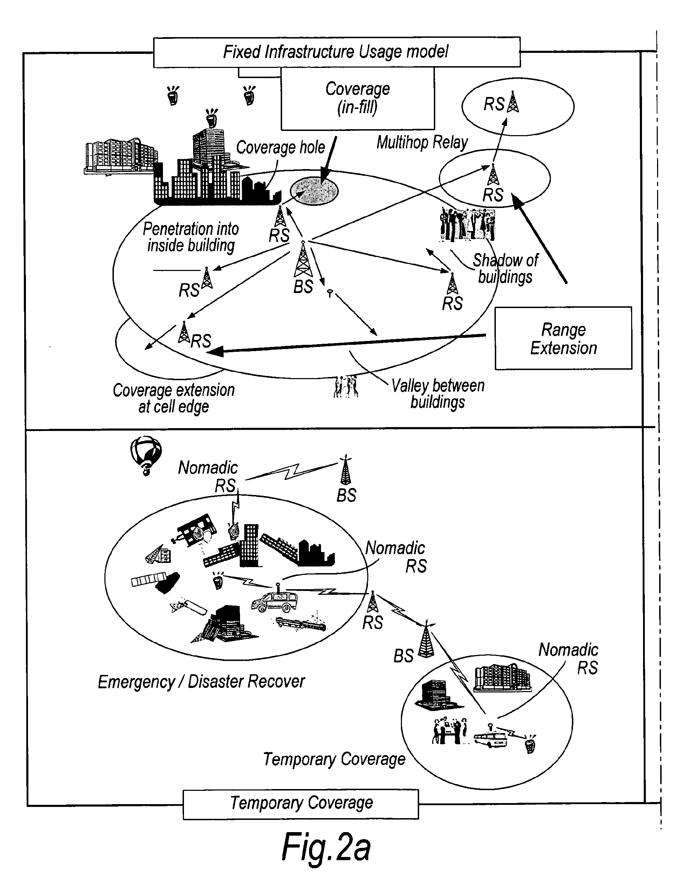

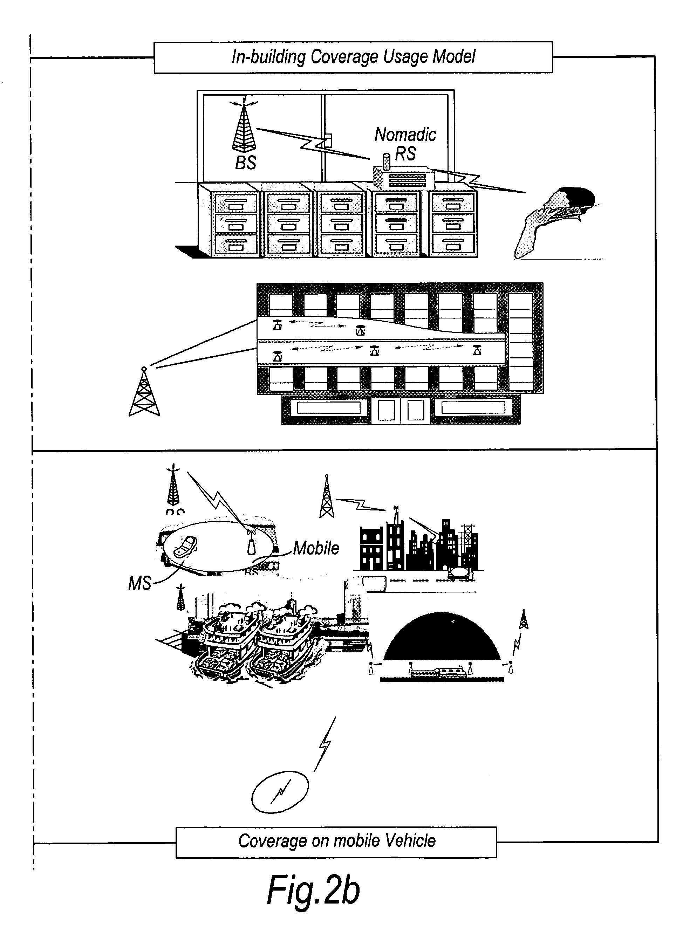

In an IEEE802.16-based system, data is transmitted in units of frames divided into downlink (DL) and uplink (UL) subframes. Each DL subframe starts with a preamble followed by a Frame Control Header (FCH), and a DL-MAP and UL_MAP to indicate the subsequent frame structure. In addition, a downlink channel descriptor DCD and uplink channel descriptor UCD are periodically sent to indicate burst profiles (modulation and error-correction schemes) employed. Relay stations can be classified as transparent or non-transparent depending on whether they alter the frames being relayed. In a non-transparent RS transmits a DL frame-start preamble, FCH, MAP message(s) and channel descriptor (DCD/UCD) messages, whereas a transparent RS does not. Figure 2 illustrates a number of applications for relay stations. For fixed infrastructure, the coverage provided by a relay station may be "in-fill" to allow access to the communication network for mobile stations which may otherwise be in the shadow of other objects or otherwise unable to receive a signal of sufficient strength from the base station despite being within the normal range of the base station. This is shown in the top half of Figure 2a and 2b. "Range extension" is also shown, in which a relay station allows access when a mobile station is outside the normal data transmission range of a base station. One example of in-fill shown in the top half of Figure 2b is positioning of a nomadic relay station to allow penetration of coverage within a building that could be above, at, or below ground level. Conversely, a relay station may be used on the uplink to allow low power transmissions from an MS to be picked up and passed on to a BS. In this way, the size of the cell served by the BS is effectively increased. The area of coverage of the BS and all of its associated relay stations is called an MMR-cell.

Other applications are nomadic relay stations which are brought into effect for temporary cover, providing access during events or emergencies/disasters, as illustrated in Figure 2a. Such a nomadic RS would normally be considered as fixed for control purposes, as it will not move over short timescales.

A final application shown in the lower half of Figure 2b provides access to a network using an MRS positioned on a vehicle; this application is of particular relevance to the invention to be described. Coverage is provided for MS devices which are travelling together on a mobile vehicle, such as a bus or a train. An MRS is mounted on the vehicle and it connects to an MR-BS or RS via a mobile relay link. The MRS provides an access link to MS/SS devices riding on the platform.

This is another instance of in-fill, because in the vehicle, each MS may be unable to receive a sufficient signal strength even if the vehicle is within the coverage range of an MR-BS or RS. The MRS is able to receive the signal from the MR-BS/RS and can communicate at the same time with the mobile stations in the vehicle.

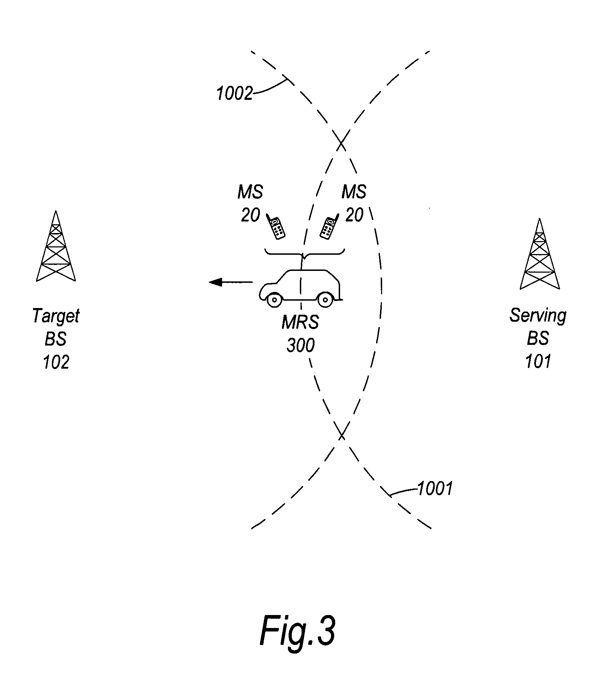

As an MRS moves around, it (and any attached MSs) may leave the area (or "cell") served by one BS, and enter an area served by a different BS. Figure 3 shows this schematically, a moving MRS 300 travelling right-to-left in the Figure such as to leave the cell (indicated by a dashed curved line 1001) of the right-hand or serving BS 101, and entering the area (shown by a continuous curved line 1002) served by the lefthand BS, called the target BS 102. That is, the target BS 102 is the target(object) of the handover, from the serving BS 101, of the moving MRS 300. The handover may not be directly between the BSs 101, 102 themselves but could occur between fixed RSs under control of either or both BSs; however, such fixed relay stations are not shown in Fig. 3 for the sake of simplicity.

Handover of an MRS between two different stations controlled by different MR-BS is referred to as inter-MR-BS handover. Other kinds of handover are also possible, for example between two RSs controlled by the same MR-BS; this is called intra-MR-BS handover. Like a fixed RS, each MRS is managed by and under control of a BS. However, when the MRS performs handover, all of its attached MSs should hand over at the same time as, or as soon as possible after, the handover by the MRS. To ensure continuity of service to users of the MSs, enhancing the reliability of handover is very important. One way to shorten the handover procedure is to supply useful information to each MS in advance of the handover. Many wireless communication systems, such as WiMAX systems, rely on the idea of each BS and RS having a particular channel characteristic. These channel characteristics are kept different as far as is practical so as to make full use of channel bandwidth for data transmissions in the system. More precisely, a channel characteristic is defined for each communication link presently active in the system, such as a relay link BS-RS. This means that MRSs moving around in the wireless communication system need some way to find out the channel characteristic in use by the BSs in range of them, as otherwise handover (or handoff) could not take place. In the case of an IEEE 802.16 wireless communication system, examples of such channel characteristics include a carrier frequency (or frequency assignment, FA), a DCD/UCD as mentioned above, PHY profile ID (identifier of a particular "profile" defined for the physical layer of the system), BS EIRP (effective isotropic radiated power of the BS), preamble index, PHY mode ID, mobility feather support (whether or not an MS supports mobility handover, sleep mode, and idle mode),_and so on.

According to a first aspect of the present invention, there is provided a handover method for use in a wireless communication system having a serving station, a target station and a relay station, the relay station being in wireless communication via a relay link with the serving station and via an access link with at least one user equipment associated with the relay station, comprising the steps of: (a) determining one or more target channel characteristic of the access link for the user equipment handover;(b) directly thereafter, informing the associated user equipment of the channel characteristic so determined; and (c) changing the access link to the target channel characteristic.

According to a second aspect of the present invention, there is provided a wireless communication system having a serving station, a target station and a relay station, the relay station being in wireless communication via a relay link with the serving station and via an access link with at least one user equipment associated with the relay station, comprising: control means arranged to determine one or more target channel characteristic of the access link; signalling means arranged, upon the control means making such determination, to inform the associated user equipment of the channel characteristic so determined; and handover means operable to change the access link to the target channel characteristic.

In the above method and system, the one or more channel characteristic can include a carrier frequency of the target station and/or one or more channel descriptors thereof, such as the DCD/UCD of an IEEE 802.16 system. Other possible channel characteristics, in a IEEE 802.16 system, include a PHY profile ID and mode ID, BS EIRP, preamble index, and mobility feather support.

A specific embodiment of the method provides a modified signalling procedure for supporting handover of a mobile stations MS attached to a moving relay station in a wireless communication system, more particularly but not exclusively an MRS as defined in IEEE802.16j. First, the target access link channel characteristic of the MRS is determined, by the MR-BS or MRS, and the MRS knows or is informed of the target channel characteristic of the access link. Then, the MRS broadcasts a MOB_NBR-ADV message to inform the MSs attached of the MRS' access link target channel characteristic. The MRS itself is included in the neighbour station list with the IEs (information elements) set to the corresponding channel characteristic so determined. This MOB-NBR-ADV is a not a normal, periodic broadcast message, but a special message preceding the handover request message. The serving MRS then exchanges handover decision and initiation stage signalling with each MS, then all the attached MSs are handed off to the same MRS on the access link with the target channel characteristic. The modified procedure can eliminate calls being dropped due to MSs attached to an MRS not being aware of the target channel characteristic at the time of receiving a handover request message from the MR-BS, and reduce handover latency for MS in IEEE 802.16j.

Embodiments of the invention provide a handover method, wireless communication system, and a relay station. The present invention also embraces computer software for executing the handover method in a relay station.

Preferred features of the present invention will now be described, by way of example, with reference to the accompanying drawings, in which:-
Figure 1a shows a two-hop wireless communication system with a fixed relay station RS;
Figure 1b shows a two-hop wireless communication system with a mobile relay station MRS;
Figures 2a and 2b show applications of relay stations;
Figure 3 is for illustrating handover of an MRS from a serving BS to a target BS;
Figure 4 is a diagram of a known handover procedure for a mobile station MS;
Figure 5 is a diagram showing a problem occurring when the procedure of Figure 4 is applied to an MRS; and

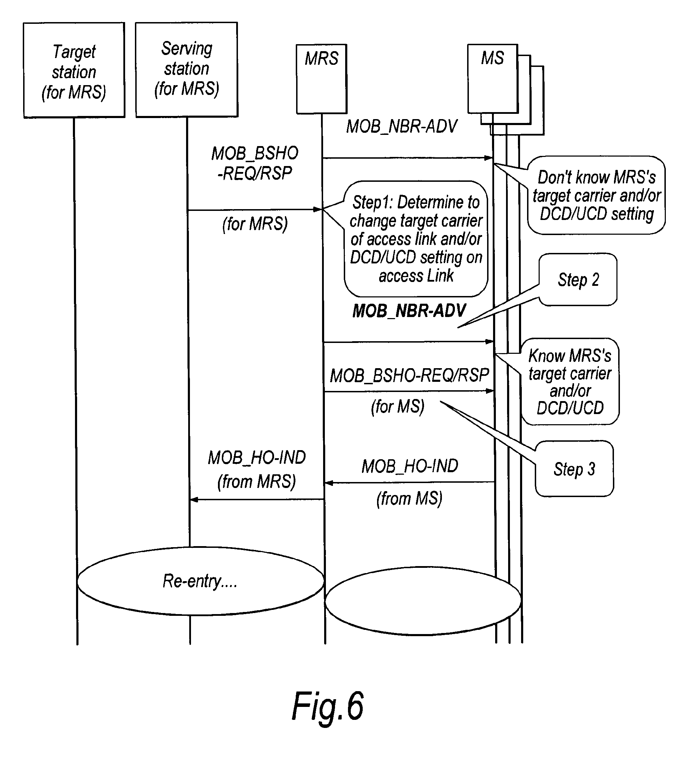

Figure 6 is a diagram showing a modified handover procedure for mobile stations attached to an MRS, embodying the present invention.

An embodiment of the present invention will now be described, taking a WiMAX system as an example. Various WiMAX standards have been proposed. IEEE802.16d is envisaged primarily for fixed subscriber stations (SS). IEEE802.16e is a standard which allows for mobile stations, and IEEE 802.16j is a further refinement of the standard which permits relay stations to be included in an 802.16e type system without changing the specifications of MSs.. The full contents of IEEE Std 802.16-2004 "Air Interface for Fixed Broadband Wireless Access Systems" and IEEE Std 802.16e-2005 "Amendment 2 and Corrigendum 1 to IEEE Std 802.16-2004" are hereby incorporated by reference.

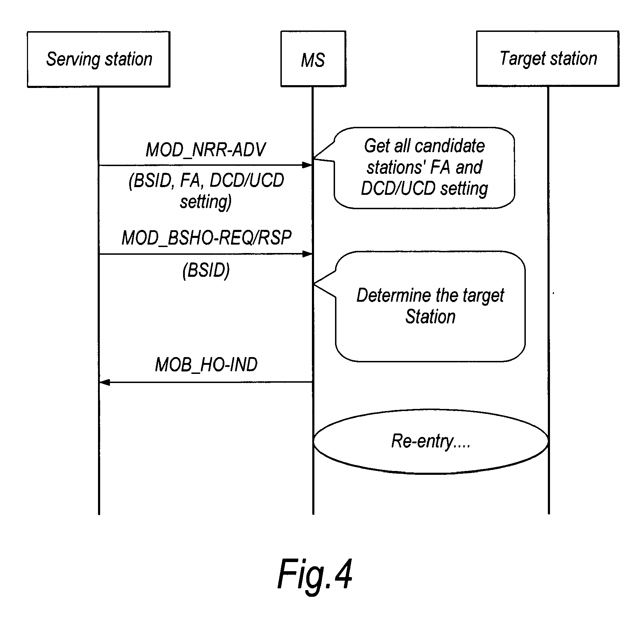

Figure 4 shows the handover procedure for a MS, as defined in IEEE802.16e. As shown, there is a "serving station", henceforth considered as a BS for simplicity, which is the station with which the MS has most recently completed registration at initial entry to the network, or as a result of a previous handover. The "target station" is a station (BS or RS) with which the MS does not currently have a communications link, but which is the object of the handover. The serving station and the target station correspond to BSs 101 and 102, respectively, shown in Fig. 3.

In accordance with IEEE802.16e, to facilitate handover of an MS to another BS, each BS periodically broadcasts (e.g. every 30 seconds) a so-called MOB_NBR-ADV message (mobile neighbour advertisement), informing every MS within range of the other BSs neighbouring that BS. Then, when an MS located in the cell of one BS moves into a neighbouring cell, the MS can perform handover because it is already aware of the BS in the neighbouring cell. More particularly, it knows an identifier of the BS (BSID), the neighbour BS's carrier frequency and DCD/UCD. The carrier frequency or RF channel allocated to each BS (normally by a higher network supervisor) is also called its frequency assignment FA.

Handover may be initiated either by the serving BS, or by the MS. That is, it may be prompted by the serving BS noting that it is difficult to serve the MS properly (for example, owing to it being located a relatively long way from the BS or any RS under its control). The BS sends of MOB_BSHO-REQ/RSP message requesting the MS to handover to another BS, identified in this message by its BSID.

Alternatively, the MS may notice a drop in signal level from the serving BS (including any intermediate RS) and perform cell scanning by sending probe signals to other cells. That is, the BS may allocate time intervals for the purpose of allowing MSs to seek out and monitor the suitability of neighbour BSs for handover, and the MS can perform cell scanning during such time intervals, synchronizing to some neighbour BS's carrier frequency and obtaining information on channel characteristics broadcast by the BS.

The format of the MOB_NBR-ADV, MOB_BSHO-REQ and MOB_BSHO-RSP messages are set out in IEEE Std 802.16e-2005 "Amendment 2 and Corrigendum 1 to IEEE Std 802.16-2004", see sections 6.3.2.3.47, 6.3.2.3.52 and 6.3.2.3.54 respectively. The MOB_NBR-ADV includes, for each neighbour base station, a field for FA Index, where FA stands for Frequency Assignment (indicating the carrier frequency of the BS), and a field for the Neighbor BSID. From the MOB_NBR-ADV, the MS is able to find out each neighbour BS's network operator, BSID, scheduling information, available resources and so on.

Thus, in the handoff procedure of a IEEE802.16e system, the MS can know the BSID, the carrier frequencies and DCD/UCD of candidate neighbour BSs by means of either the MOB_NBR-ADV message from the Serving BS or by neighbour cell scanning procedure. In the MOB_NBR-ADV, for each of the neighbour stations, information about the BSID, FA and DCD/UCD is provided. Subsequently, when the Serving BS issues a handoff request to an MS by sending the MOB_BSHO-REQ/RSP message, the message carries the "target" BSID, but does not carry any information about the MS's target carrier frequency or DCD/UCD (see Figure 4). Upon receiving the MOB_BSHO-REQ/RSP message, the MS is able to determine the target BS's carrier frequency and DCD/UCD information using the information it acquired about the neighbour cells. In Figure 4, although the serving and target stations will normally be different, in some cases the "target" BS and the serving BS for the MS can be the same. That is, it may be necessary for the BS to disconnect an existing link with an MS and open a new link.

Now consider a situation of a Mobile Relay Station (MRS), as defined in IEEE802.16j, located on a vehicle (eg: bus or a train). When the MRS hands over from one base station to another, in the case where it needs to change the access link's channel characteristic (carrier frequency, DCD/UCD and so on). Any MSs attached to the MRS need to perform handover to the same physical MRS but with a different channel characteristic. However, before the MRS conducts handover, even the MRS itself doesn't know what kind of channel characteristic it will change the access link to (this is because it doesn't know its target serving station).

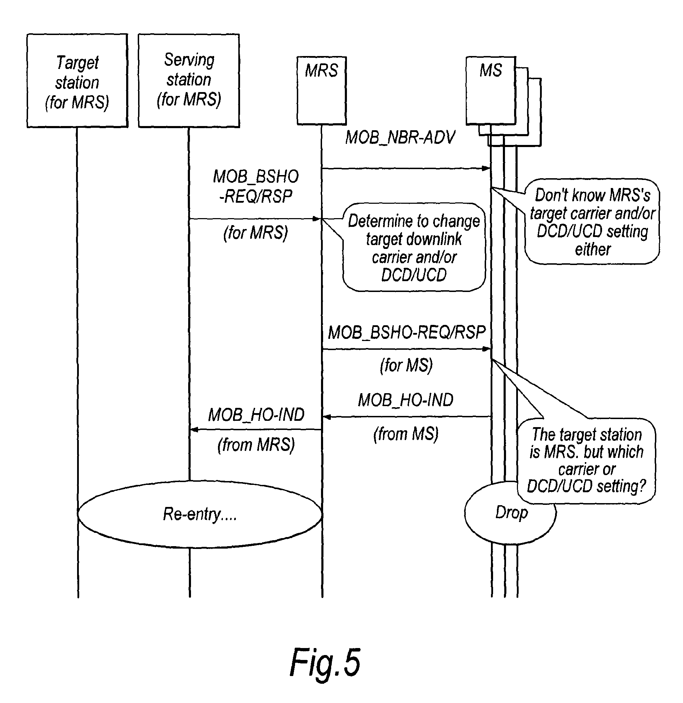

Any MOB_NBR-ADV received by MS before the MRS handover procedure associates the MRS with its current channel characteristic, not to the target channel characteristic. However, after MSs attached to the MRS receive a MBO_BSHO-REQ/RSP message and conduct the handover, without knowledge of the information on target carrier frequency, it is necessary for each MS to scan neighbour stations' carriers or other possible channels of the downlink frequency band of operation until it finds a valid downlink signal. In the case that the MSs lack knowledge of the DCD/UCD information, after each MS achieves synchronization at the physical layer level it needs to monitor the transmissions of DCD/UCD from neighbour stations, which may take up to 10 seconds. As will be apparent, the procedure in either case takes too much time, meaning that the MS may not be able to perform handover successfully and may drop the call (see Figure 5)..

In view of the above problem, a method embodying the present invention provides the following steps in a handover process involving serving and target BSs (i.e. MR-BSs), an MRS and its attached MSs. The following method involves the MRS transmitting its own MOB_NBR-ADV message and thus is suitable for a non-transparent type RS.

Step 1: During the procedure of MRS handover, in the case where the target access link channel characteristic after the handover, is determined to have changed, by the MR-BS or MRS, the MRS should be informed of, or know this automatically.

Step 2: the MRS broadcasts a MOB_NBR-ADV message to inform the MSs attached of the changed information (FA and/or DCD/UCD). The MRS itself should be included in the neighbour station list with the IEs set to the corresponding target channel characteristic; for example, the FA Index is set to the target carrier frequency of the MRS, and/or the DCD/UCD setting is set based on the changed DCD/UCD of the MRS. This MOB_NBR-ADV message is a not periodic broadcast and precedes the handover request message.

Step 3 : The serving MRS exchanges handover decision and initiation stage signalling (6.3.22.2.2) with each MS. The MOB_BSHO-REQ/RSP message should carry the same BSID as the serving MRS ID in the "Neighbor BSID" field, under mode=0b000 with operation mode=1 (see IEEE Std 802.16e-2005 "Amendment 2 and Corrigendum 1 to IEEE Std 802.16-2004", section 6.3.2.3.52).

Step 4: The MRS changes the access link to the target channel characteristic, then the attached MSs conduct handover to the MRS. For example, in the case of a handover which changes the carrier frequency (FA), the MRS changes the relay-link to the target carrier, meanwhile all the attached MSs are handed-off to the same MRS with the carrier on the access link changed to the target carrier frequency. In the case where the DCD/UCD has changed, the MRS hands over to the target station and meanwhile all its attached MSs are handed over to the MRS without monitoring the broadcast DCD/UCD from the MRS.

In the above procedure, the Step 2 message is required to ensure successfully handoff the access link with the target channel characteristic.

Whilst the above description has referred to mobile stations by way of example, it would be possible to employ the present invention with user equipment (UEs) even if they are fixed.

Thus, an embodiment of the present invention can provide a modified signalling procedure for supporting handover of a mobile stations attached to a moving relay station in a wireless communication system, more particularly but not exclusively mobile and relay stations (MRS) as defined in IEEE802.16j. If the system is operated without the proposed modified signalling procedure, then at best additional hand-off latency would be incurred and in the worst case calls would be dropped. Thus, it is possible by means of the present invention to eliminate calls being dropped, due to an MS attached to an MRS not being aware of the handover target channel characteristic for the access link. More generally, the present invention can reduce handover latency of MS attached to a MRS in a wireless communication system.

Whilst the above description has explained a procedure or method embodying the present invention, it will be apparent to those skilled in the art that the procedure is carried out by elements of a wireless communication system and in particular by a mobile relay station. Embodiments of the present invention may be implemented in hardware, or as software modules running on one or more processors, or on a combination thereof. That is, a microprocessor or digital signal processor (DSP) may be used in practice to implement some or all of the functionality of a relay station embodying the present invention. The invention may also be embodied as one or more device or apparatus programs (e.g. computer programs and computer program products) for carrying out part or all of any of the methods described herein. Such programs embodying the present invention may be stored on computer-readable media, or could, for example, be in the form of one or more signals. Such signals may be data signals downloadable from an Internet website, or provided on a carrier signal, or in any other form. As will also be apparent to those skilled in the art, in some instances, mobile relay stations of a wireless communication system may be constituted by MSs/UEs of the system, when at least some of the available MSs./UEs have the capability to relay data to and from other MSs/UEs. Thus, a program embodying the invention could also be used to add the functionality of the RS as described above to a mobile station or other user equipment having suitable hardware.

## Claims

1. A handover method for use in a wireless communication system having a serving station, a target station and a relay station, the relay station being in wireless communication via a relay link with the serving station and via an access link with at least one user equipment associated with the relay station, comprising the steps of:
(a) determining one or more target channel characteristic of the access link for the user equipment handover;
(b) directly thereafter, informing the associated user equipment of the channel characteristic so determined; and
(c) changing the access link to the target channel characteristic.

2. The handover method according to claim 1, wherein the channel characteristic includes a carrier frequency in use on the access link.

3. The handover method according to claim 1 or 2, wherein the channel characteristic includes one or more channel descriptor of the access link.

4. The handover method according to claim 1, 2 or 3 wherein steps (b) and (c) are performed using the relay station and step (b) further comprises sending a handover request to each associated user equipment.

5. The handover method according to any preceding claim, wherein step (a) is preceded by determining that a handover of the relay station is required, and step (c) is preceded by changing the relay link to the target channel characteristic.

6. The handover method according to claim 1 or 2 wherein step (a) is performed by the relay station.

7. The handover method according to claim 1 or 2 wherein step (a) is performed by the serving station, which informs the relay station of the determination result.

8. The handover method according to any preceding claim wherein the serving station is a base station.

9. The handover method according to any preceding claim wherein the target station is a base station.

10. The handover method according to any of claims 1 to 7 wherein the serving station is a relay station.

11. The handover method according to any of claims 1 to 8 wherein the target station is a relay station.

12. The handover method according to any preceding claim wherein the user equipment is a mobile station.

13. The handover method according to any preceding claim wherein the relay station is a mobile relay station.

14. The handover method according to any preceding claim wherein the wireless communication system is an IEEE802.16 system.

15. The handover method according to claim 14 when appended to claim 3, wherein the channel descriptor is a DCD/UCD broadcast by the relay station.

16. The handover method according to claim 14 wherein step (c) is performed by the relay station broadcasting a MOB_NBR-ADV message specifying the target carrier frequency to the associated user equipment.

17. The handover method according to claim 16 wherein the MOB_NBR-ADV message is a special message independent of any MOB_NBR-ADV periodically sent by the serving station, and sent immediately the relay station knows the target carrier frequency of the access link.

18. The handover method according to claim 17 wherein the MOB_NBR-ADV message includes an identifier of the relay station itself in a neighbour station list of the message.

19. The handover method according to claim 18 wherein the relay station follows the MOB_NBR-ADV message with a MOB_BSHO-REQ/RSP message in which the identifier of the relay station is in a recommended list.

20. A wireless communication system having a serving station, a target station and a relay station, the relay station being in wireless communication via a relay link with the serving station and via an access link with at least one user equipment associated with the relay station, comprising:
control means arranged to determine one or more target channel characteristic of the access link;
signalling means arranged, upon the control means making such determination, to inform the associated user equipment of the channel characteristic so determined; and
handover means operable to change the access link to the target channel characteristics.

21. The wireless communication system according to claim 20 wherein the control means is part of the serving station.

22. The wireless communication system according to claim 20 wherein the control means is part of the relay station.

23. The wireless communication system according to claim 20, 21 or 22 wherein the signalling means and the handover means are contained at least partly in the relay station.

24. The wireless communication system according to claim 23 wherein the relay station is mobile.

25. The wireless communication system according to claim 24 wherein the wireless communication system is compliant with standard IEEE802.16j, the relay station being a Mobile Relay Station MRS as defined in that standard.

26. The wireless communication system according to claim 25 wherein the relay station is configured, upon determination of the one or more target channel characteristics, to send a MOB_NBR-ADV specifying the channel characteristics to each user equipment associated with it.

27. A relay station for use in the wireless communication system according to any of claims 20 to 26.

28. Software which, when executed by a processor of a wireless transceiver unit in a wireless communication system, provides the relay station of claim 27.

## Amended claims

### Amended claims in accordance with Rule 137(2) EPC.

**1.** A handover method for use in a wireless communication system having a serving station, a target station and a relay station (MRS), the relay station being in wireless communication via a relay link with the serving station and via an access link with at least one user equipment (MS) associated with the relay station, comprising the steps of:
(a) determining one or more target channel characteristic of the access link for the user equipment handover;
(b) thereafter, the relay station (MRS) sending a handover request to each associated user equipment (MS), and informing the associated user equipment of the channel characteristic so determined by broadcasting a mobile neighbour advertisement message to the associated user equipment; and
(c) the relay station (MRS) changing the access link to the target channel characteristic;
**characterised in that** the mobile neighbour advertisement message is a non-periodic broadcast and precedes the handover request message.

**2.** The handover method according to claim 1, wherein the channel characteristic includes a carrier frequency in use on the access link.

**3.** The handover method according to claim 1 or 2, wherein the channel characteristic includes one or more channel descriptor of the access link.

**4.** The handover method according to any preceding claim, wherein step (a) is preceded by determining that a handover of the relay station (MRS) is required, and step (c) is preceded by changing the relay link to the target channel characteristic.

**5.** The handover method according to claim 1 or 2 wherein step (a) is performed by the relay station (MRS).

**6.** The handover method according to claim 1 or 2 wherein step (a) is performed by the serving station, which informs the relay station (MRS) of the determination result.

**7.** The handover method according to any preceding claim wherein the serving station is a base station.

**8.** The handover method according to any preceding claim wherein the target station is a base station.

**9.** The handover method according to any of claims 1 to 6 wherein the serving station is a relay station.

**10.** The handover method according to any of claims 1 to 7 wherein the target station is a relay station.

**11.** The handover method according to any preceding claim wherein the user equipment is a mobile station (MS).

**12.** The handover method according to any preceding claim wherein the relay station is a mobile relay station (MRS).

**13.** The handover method according to any preceding claim wherein the wireless communication system is an IEEE802.16 system.

**14.** The handover method according to claim 13 when appended to claim 3, wherein the channel descriptor is a DCD/UCD broadcast by the relay station (MRS).

**15.** The handover method according to claim 13 wherein the mobile neighbour advertisement is a MOB_NBR-ADV message specifying the target carrier frequency to the associated user equipment (MS).

**16.** The handover method according to claim 15 wherein the MOB_NBR-ADV message includes an identifier of the relay station (MRS) itself in a neighbour station list of the message.

**17.** The handover method according to claim 16 wherein the relay station (MRS) follows the MOB_NBR-ADV message with a MOB_BSHO-REQ/RSP message in which the identifier of the relay station (MRS) is in a recommended list.

**18.** A wireless communication system having a serving station, a target station and a relay station (MRS), the relay station being in wireless communication via a relay link with the serving station and via an access link with at least one user equipment (MS) associated with the relay station, the system comprising:
control means arranged to determine one or more target channel characteristic of the access link; and the relay station (MRS) comprising
signalling means arranged, upon the control means making such determination, to send a handover request to the associated user equipment (MS), and to inform the associated user equipment of the channel characteristic so determined by broadcasting a mobile neighbour advertisement message; and
handover means operable to change the access link to the target channel characteristics;
**characterised in that** the signalling means is arranged to broadcast said mobile neighbour advertisement message in the form of a non-periodic broadcast which precedes the handover request message.

**19.** The wireless communication system according to claim 18 wherein the control means is part of the serving station.

**20.** The wireless communication system according to claim 18 wherein the control means is part of the relay station (MRS).

**21.** The wireless communication system according to claim 20 wherein the relay station (MRS) is mobile.

**22.** The wireless communication system according to claim 21 wherein the wireless communication system is compliant with standard IEEE802.16j, the relay station being a Mobile Relay Station (MRS) as defined in that standard.

**23.** The wireless communication system according to claim 22 wherein the relay station (MRS) is configured, upon determination of the one or more target channel characteristics, to send the mobile neighbour advertisement message in the form of a MOB_NBR-ADV specifying the channel characteristics to each user equipment (MS) associated with it and including an identifier of the relay station (MRS) itself in a neighbour station list of the message.

**24.** A relay station (MRS) for use in the wireless communication system according to any of claims 18 to 23.

**25.** Software which, when executed by a processor of a wireless transceiver unit in a wireless communication system, causes the wireless transceiver unit to provide the relay station (MRS) of claim 24.
